# EUROPEAN PATENT SPECIFICATION

(11) **EP 3 734 569 B1**
(45) Date of publication and mention of the grant of the patent: **20.11.2024**
(21) Application number: 19171973.1
(22) Date of filing: 30.04.2019
(51) Int. Cl.: G08G 1/01, G08G 1/16, G08G 1/0967, G01S 5/00, B60W 50/00

(54) **METHOD, SYSTEM, BACKEND SERVER AND OBSERVATION-UNIT FOR SUPPORTING AT LEAST ONE SELF-DRIVING VEHICLE IN COPING WITH A CHARACTERISTIC BEHAVIOR OF LOCAL TRAFFIC IN A RESPECTIVE SPECIFIC AREA AND CORRESPONDING SELF-DRIVING VEHICLE OPERABLE ACCORDING TO THE DRIVING STRATEGY**
VERFAHREN, SYSTEM, BACKEND-SERVER UND BEOBACHTUNGSEINHEIT ZUR UNTERSTÜTZUNG MINDESTENS EINES SELBSTFAHRENDEN FAHRZEUGS BEI DER BEWÄLTIGUNG EINES CHARAKTERISTISCHEN VERHALTENS DES ÖRTLICHEN VERKEHRS IN EINEM JEWEILIGEN SPEZIFISCHEN BEREICH UND ENTSPRECHENDES SELBSTFAHRENDES FAHRZEUG, DAS GEMÄSS DER FAHRSTRATEGIE BETRIEBEN WERDEN KANN
PROCÉDÉ, SYSTÈME, SERVEUR DORSAL ET UNITÉ D'OBSERVATION POUR AIDER AU MOINS UN VÉHICULE À CONDUITE AUTOMATIQUE À FAIRE FACE À UN COMPORTEMENT CARACTÉRISTIQUE DU TRAFIC LOCAL DANS UNE ZONE SPÉCIFIQUE RESPECTIVE ET VÉHICULE À CONDUITE AUTOMATIQUE CORRESPONDANT FONCTIONNANT SELON LA STRATÉGIE DE CONDUITE

(43) Date of publication of application: 04.11.2020
(73) Proprietor: Argo AI GmbH, 80805 München (DE)
(72) Inventor: FRIEDMANN, Felix, 85386 Eching (DE); FERRONI, Francesco, 81379 München (DE); MEERTENS, Roland, 80807 München (DE); GOLAKIYA, Nirav, 81929 München (DE); IEGOROV, Andrii, 80333 München (DE)
(74) Representative: Hofstetter, Schurack & Partner

(56) References cited:
- EP-A1- 3 272 611
- US-A1- 2016 171 885
- US-A1- 2017 010 105
- US-A1- 2017 327 035
- US-A1- 2018 011 494
- US-A1- 2019 084 571
- US-A1- 2019 107 840

## Description

The invention is concerned with a method for providing at least one regionally limited driving strategy for a respective autopilot functionality of at least one self-driving vehicle. The respective driving strategy is provided for coping with a characteristic behavior of local traffic in a respective specific regionally limited area, like, e.g., a specific town quarter. The inventions also provides a system for performing the inventive method and an observation unit and a self-driving vehicle for the system.

In a self-driving vehicle, different driving behaviors / driving strategies may be implemented in order to cope with regional differences regarding the behavior of the local traffic in that area. For example, close to a school, children may tend to cross the road without watching, such that the driving strategy should be adapted in that area (for example to a driving strategy for driving at much lower speed than is actually allowed). An alternative example may be an area where local residents tend to drive with limited attention as they believe they know the local traffic situation well.

Regions with specific properties (school close by or a town quarter with recklessly driving locals) may be noted in a digital street map of a spatial database that may be run by an internet server. A self-driving vehicle may determine its own position and may find out which region or area it is in or it is approaching. A look-up in the map or spatial database then reveals the properties of the surrounding region, i.e. the necessary driving strategy for coping with local peculiarities or characteristics of the local traffic. The vehicle may then choose an appropriate driving strategy.

To this end, the properties must be correctly described in the map or spatial database. However, it is very cost intensive to observe the average behavior of the traffic in different regions.

Document EP 1 302 356 A1 discloses recognizing a specific region (using GPS) and obtaining driving information for that region (speed recommendation). The vehicle is then controlled in that region according to that driving information. The document does not disclose how other traffic participants may be observed for deriving a driving strategy.

Document EP 3 219 564 A1 discloses the typical training of a neural network such that the vehicle remembers certain drive ways and predicts the future steering angle etc. for that drive way. The document does not describe the observation of other traffic participants. No transfer of knowledge to other autopilots by means of a map is described.

Document US 2017/0286826 A1 discloses a special strategy for structuring and training a neural network. No explicit observation of other traffic participants is described and the result of the training is not transferred to other autopilots via a map.

Document US 2019/0107840 A1 discloses a computing system that controls an autonomous vehicle. The computing system includes a machine-learned yield model configured to receive and process feature data descriptive of objects perceived by the autonomous vehicle and, in response, provide yield decisions for the autonomous vehicle relative to the objects.

Document EP 3 272 611 A1 discloses an information processing system, an information processing method and a program. The information processing system includes a detector that detects a vehicle environment state, which is at least one of surroundings of a vehicle and a driving state of the vehicle, a behavior learning unit configured to cause a neural network to learn a relationship between the vehicle environment state detected by the detector and a behavior of the vehicle implemented after the vehicle environment state and a behavior estimation unit configured to estimate a behavior of the vehicle by inputting, into the neural network that learned, the vehicle environment state detected at a current point in time by the detector.

Document US 2017/0327035 discloses a method and a system for beyond-the-horizon threat indication for vehicles. A system and a method may involve receiving motion information of a first vehicle, may also involve receiving vicinity data corresponding to a vicinity of the first vehicle and may also involve determining whether the first vehicle is subject to a potential hazard within the vicinity based on the motion information and the vicinity data.

US 2017 / 010 105 A1 describes a system for autonomously navigating a vehicle along a road segment may be based on a predetermined landmark location. The system may include at least one processor programmed to receive from a camera, at least one image representative of an environment of the vehicle, and determine a position of the vehicle along a predetermined road model trajectory associated with the road segment based, at least in part, on information associated with the at least one image. The at least one processor may be further programmed to identify a recognized landmark forward of the vehicle based on the determined position, wherein the recognized landmark is beyond a sight range of the camera, and determine a current distance between the vehicle and the recognized landmark by comparing the determined position of the vehicle with a predetermined position of the recognized landmark. The at least one processor may also be programmed to determine an autonomous navigational response for the vehicle based on the determined current distance.

US 2019 / 084571 A1 relates to relate to driving scenario based lane guideline for path planning of autonomous driving vehicles. In one embodiment, in response to a route from a source location to a target location, the route is analyzed to identify a list of one or more driving scenarios along the route that match one or more predetermined driving scenarios. The route is segmented into a list of route segments based on the driving scenarios. At least one of the route segments corresponds to one of the identified driving scenarios. A path is generated based on the route segments for driving an autonomous driving vehicle from the source location to the target location. The path includes a number of path segments corresponding to the route segments. At least one of the path segments of the path is determined based on a preconfigured path segment of a predetermined driving scenario associated with the path segment, without having to calculating the same at real time.

US 2018 / 011 494 A1 describes a scene-based planning control methods for operating autonomous vehicles. In one embodiment, motion planning and control data is received, where the motion planning and control data indicates that an autonomous vehicle is to move from a first point to a second point of a path within a predetermined route. In response to the motion planning and control data, the path from the first point to the second point is segmented into multiple path segments. For each of the path segments, one of predetermined driving scenes is identified that matches motion characteristics of the corresponding path segment. The motion planning and control data associated with the path segments is modified based on predetermined motion settings of the path segments. The autonomous vehicle is driven through the path segments of the path based on the modified motion planning and control data.

US 2016 / 171 885 A1 describes a method that comprises determining driving characteristic information for one or more vehicles in association with a segment of a travel path navigated by each of the one or more vehicles. The method also comprises processing and/or facilitating a processing of the driving characteristic information to determine one or more response types, one or more behavior types, or a combination thereof associated with the segment of the travel path. The method further comprises associating the one or more response types, the one or more behavior types, or a combination thereof with mapping information for specifying the segment of the travel path, a behavior connection link-chain, or a combination thereof.

It is an object of the present invention to derive and implement local driving strategies cost effectively.

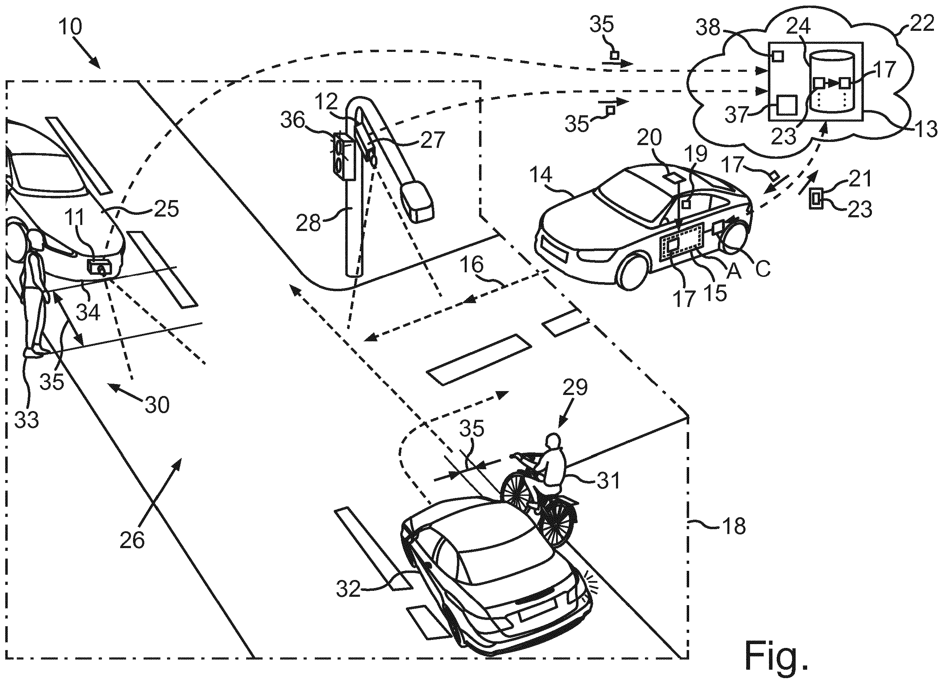

The object is accomplished by the subject matter of the independent claims. Advantageous developments with convenient and non-trivial further embodiments of the invention are specified in the following description, the dependent claims and the figure.

The invention is concerned with a method for supporting a respective autopilot functionality of at least one self-driving vehicle. The support regards coping with a respective characteristic behavior of local traffic in a respective specific regionally limited area. In other words, the method helps or supports the autopilot functionality of at least one self-driving vehicle in dealing with or predicting the behavior of local traffic in a specific regionally limited area, e.g. in a specific town quarter or a specific village. Each area can be smaller than 20 km², especially smaller than 10 km².

The method is characterized in that observation units respectively observe at least one traffic situation in the corresponding area for which the respective support is to be provided. A traffic situation is a constellation in which at least two traffic participant may have to consider each other's driving behavior. Each traffic situation involves at least two traffic participants and the observation concerns relative dynamic parameters of the at least two observed traffic participants. For example, a traffic situation can be a vehicle (first traffic participant) turning right at a crossroad when a cyclist (second traffic participant) who is driving on the right side of the vehicle wants to continue straight ahead. The vehicle turning right therefore has to wait until the cyclist has driven by. The observed dynamic parameters describe a relative distance and/or a relative speed and/or a relative acceleration of at least one of the traffic participants with regard to at least one other of the traffic participants in the traffic situation. Said acceleration may concern the increase and the decrease of a moving speed. In the described example, an observation unit may observe how close the cyclist passes by the waiting vehicle and/or how fast the vehicle approaches the crossroads and/or how drastically the vehicle decelerates (negative acceleration) when the driver approaches the crossroad and stops the vehicle for letting pass by the cyclist. The observation unit for observing the specific traffic situation therefore derives or measures dynamic parameters that describe the dynamic behavior or the movement of the at least two traffic participants when these are involved in a common or shared traffic situation where, e.g., one of the traffic participants has to wait or give right to another traffic participant. The dynamic parameters describe the relative distance and/or relative speed and/or the relative acceleration that is chosen by at least one of the traffic participants in the traffic situation.

Based on the observed dynamic parameters, a behavior model is derived that describes an expected or typical behavior of the traffic participants in the area as regards the relative dynamic parameters. The behavior model may describe the average behavior, e.g. average values of the observed dynamic parameters, e.g. relative distance and/or relative speed and/or relative acceleration. The expected behavior may also be described as a statistical distribution, i.e. not only the average mean value, but also, for example, a variance. The expected behavior is preferably the cumulative description or cumulative evaluation of all observed traffic situations of the respective at least one observation unit or of all observation units that observed dynamic parameters in the respective area. In other words, there is a respective behavior model for each observed area.

The derived behavior model is stored in a spatial database where the behavior model is associated with the respective area for which it has been derived. This can be achieved by associating description data identifying the area with the model. The spatial database may be provided by a backend server that may be based on at least one internet server or a cloud server structure of the Internet. The respective behavior model for each area may be derived by this backend server, also. To this end, each observation unit may provide the observed dynamic parameters to the backend server, where the respective behavior model for each area may be derived. Alternatively, each observation unit may derive its own behavior model and the behavior models of each observation unit may be united or combined by the backend server such that a single behavior model is available for each area in the spatial database.

Once a behavior model is available in the spatial database, at least one self-driving vehicle may make use of this behavior model. In answer to a respective support request of the at least one self-driving vehicle, the behavior model for the area that is identified by the respective support request is fetched or obtained from the spatial database and provided to the autopilot functionality of the requesting self-driving vehicle. Generally, the spatial database may provide a respective behavior model for several different areas. When a self-driving vehicle approaches or enters or drives through one of these areas, its autopilot functionality may switch to a corresponding behavior model that is provided for that area or that is valid only for that area.

For obtaining this behavior model, the self-driving vehicle may send a support request to the spatial database. The support request may identify the area for which a behavior model is needed. The spatial database may then search the corresponding behavior model in its storage and may provide the behavior model to the requesting self-driving vehicle. In the self-driving vehicle, the autopilot functionality may then be configured or adapted according to the behavior model. The autopilot functionality may then consider or predict the behavior of other traffic participants in that area based on the behavior model. For example, the autopilot functionality may predict that in the specific area it is driving in, traffic participants tend to accept and/or risk values of the relative dynamic parameters (relative distance and/or relative speed and/or relative acceleration) that would trigger a safe maneuver (e.g. safety break) in the autopilot functionality, if the behavior model was not used. For example, traffic participants may pass by other traffic participants at distances that are smaller than a predefined threshold where the autopilot functionality would normally initiate a safety maneuver. The behavior model may signal to the autopilot functionality that the threshold has to be lowered as the local traffic participants will tend to pass by the self-driving vehicle at lower distances than the original value of the threshold will tolerate.

The observation units and the self-driving vehicle may each be linked to the spatial database, e.g. to the already mentioned backend server, on the basis of a communication link that can be based on e.g. a mobile communication network and/or a wireless local area network.

The invention provides the advantage that a self-driving vehicle may adapt or prepare its own driving behavior to the local traffic, e.g. in a specific town quarter or a specific village. The necessary behavior model may be derived from at least one observed driving situation.

According to the invention, different driving behaviors / driving strategies are provided for an autopilot functionality of the self-driving vehicle in order to cope with regional differences regarding the behavior of the local traffic in an area. For example, close to a school, children may tend to cross the road without watching, such that the driving strategy should be adapted in that area (for example driving at much lower speed than is actually allowed, which corresponds to a specific level of aggressiveness).

According to the invention, for observing the at least one relative dynamic parameter, at least one of the observation units is at least partially integrated into an observation vehicle. In other words, the observation unit may be part of the observation vehicle, or the observation unit may be split into two components, wherein one component is in the observation vehicle. The other component may be, for example arranged, in the backend server. The two components may be linked, for example, on the basis of a communication link that can be based on e.g. a mobile communication network and/or a wireless local area network. The at least one relative dynamic parameter observed by this observation unit that is integrated into an observation vehicle is measured with regard to the observation vehicle itself. In other words, the observation unit will observe the relative distance and/or relative speed and/or relative acceleration of the observation vehicle itself with regard to at least one other traffic participant. In other words, the observation vehicle itself is a traffic participant and, by using the observation vehicle as a reference, the at least one dynamic parameter can be measured with the observation vehicle as a reference. As the distance of the observation vehicle to the at least one sensor of the observation unit is known a priori and/or fixed, this may lead to an exact measurement. For example, the radar and/or sonar and/or optical sensor (camera) of the observation vehicle can be used for measuring the at least one relative dynamic parameter with regard to at least one other traffic participant.

According to the invention, at least one of the observation units is at least partially integrated into an observation vehicle; and the at least one relative dynamic parameter is measured between at least two other traffic participants. In other words, the observation unit can be structured in the same way as has already been described. However, instead of measuring the at least one dynamic parameter with regard to the observation vehicle itself, the at least one relative dynamic parameter is measured between at least two other traffic participants. In other words, the observation unit observes a traffic situation in which only the two other traffic participants are involved, but not the observation vehicle itself. This provides the advantage that traffic situations may be evaluated or observed which the observation vehicle itself has not experienced yet. This provides a wider basis for information. The observation vehicle may for example observe two other vehicles that are involved in a common traffic situation at a crossroad.

According to the invention, at least one of the observation units is at least partially integrated into a stationary traffic observation device. Such a stationary traffic observation device can be e.g. a camera that may be integrated or installed for example in a lamp post or at a bridge. Such a traffic observation device observes the traffic in a specific region, e.g. at a crossroad. The observation unit integrated in a stationary traffic observation device may also comprise the described two components, one integrated in the observation device and one provided by e.g. the backend server. By the observation unit integrated in the observation device, the at least one relative dynamic parameter is measured with regard to at least two traffic participants passing by the respective observation device. Integrating an observation unit into a stationary traffic observation device provides the advantage that, for a respective area in which the observation device is situated, a continuous observation of traffic situations or a repeated measurement of dynamic parameters is possible, as the observation device stays within this area. As a contrast, a vehicle may only measure or observe the at least one dynamic parameter while it drives inside that area, which may be a limited amount of time.

The invention also comprises embodiments that provide additional advantages.

In one embodiment, said behavior model comprises an artificial neural network. For deriving the behavior model, the respective observation unit trains the neural network while observing the at least one traffic situation and feeds the observed at least one relative dynamic parameter into the neural network as input data. When training the neural network, a training algorithm is performed or in action. Such a training algorithm may be, for example, a force-feedback algorithm. Feeding the at least one observed relative dynamic parameter into the neural network will ensure that, by the training, the information contained in the at least one relative dynamic parameter is stored in the neural network. For example, the neural network may be trained to predict the resulting of final value of the at least one dynamic parameter for each observed traffic situation when the respective beginning of the traffic situation is recognized or detected. The neural network can then directly be used for extrapolating or predicting the resulting value maximum or minimum of the at least one dynamic parameter (minimum distance, maximum speed or acceleration), as it may occur in traffic situations in the area.

In one embodiment, the respective behavior model comprises configuration data for a trajectory prediction. Such a trajectory prediction can be implemented as an algorithm that extrapolates or predicts a movement or trajectory of a traffic participant. The trajectory prediction may be executed by the autopilot functionality of a self-driving vehicle. The configuration data are designed to configure the extrapolation algorithm for predicting a future behavior of traffic participants observed by the self-driving vehicle in the corresponding area. In other words, by implementing or taking over the behavior model, the autopilot functionality of the self-driving vehicle is enabled to predict the future behavior of traffic participants in the respective area on the basis of the at least one observed relative dynamic parameter as it has been observed in the corresponding area. This allows for an area-specific prediction of the behavior.

According to the invention, the respective behavior model comprises a value describing a level of aggressiveness that the self-driving vehicle, that has requested the behavior model, shall apply and/or expect in the area. The level of aggressiveness sets a minimum distance threshold that the autopilot of the self-driving vehicle will comply with when planning driving maneuvers while driving through the area. In other words, the level of aggressiveness describes how close the self-driving vehicle will pass by or stop in front of other traffic participants without triggering a safety maneuver, e.g. a safety braking. The level of aggressiveness is a very general and, therefore, very flexible way of describing the behavior of traffic participants in an area. It enables the autopilot functionality of the self-driving vehicle to distinguish between an acceptable traffic situation and an emergency traffic situation where a traffic participant comes that close to the self-driving vehicle that an emergency maneuver is necessary or to be triggered.

For implementing the inventive method, a system is provided by the invention. This system is for supporting at least one self-driving vehicle in driving through at least one specific regionally limited area, e.g. a town quarter or a specific village. The system comprises at least one observation unit and a spatial database. The spatial database may be provided by said backend server. The system also comprises the at least one self-driving vehicle that uses at least one behavior model from the spatial database. The at least one observation unit is each designed to perform the described steps regarding the observation unit of an embodiment of the inventive method. The spatial database is designed to perform the described steps regarding the spatial database of an embodiment of the inventive method. Thus, the system may provide the at least one self-driving vehicle with a respective behavior model for at least one regionally limited area through which the self-driving vehicle needs to drive or pass through.

For building the system, the invention also provides an observation unit for the system. The observation unit is designed to observe at least one traffic situation in at least one predefined area for which a respective driving strategy is to be provided. As has already been described, each traffic situation involves at least two traffic participants, and by the observation at least one relative dynamic parameter is obtained or observed. The observation unit is further designed to derive a behavior model based on the observed dynamic parameter. The behavior model describes an expected behavior of the traffic participants in the respective area as regards the at least one relative dynamic parameter. The observation unit is finally designed to provide the observed at least one relative dynamic parameter and/or a derived behavior model to a spatial database of a backend server, wherein the observed at least one relative dynamic parameter and/or the behavior model is associated with the respective area for which it has been derived. The observation unit can be implemented in an observation unit or in a stationary traffic observation device, as has already been described. The observation unit may also comprise two components, one locally present in the area, e.g. in an observation area or an observation device, and one may be present in the backend server, e.g. as a program module. In an observation vehicle or a stationary observation device, the observation unit or one of its components may be implemented as a program module and/or an electronic control unit and/or on the basis of at least one sensor of the vehicle or observation device. For example, an autopilot functionality of an observation vehicle may be used for providing the observation unit in such that the digital environment map of the autopilot functionality may be evaluated for deriving the at least one relative dynamic parameter. This environment map describes the traffic participants that have been recognized or detected by the autopilot functionality in the surroundings or environment of the vehicle.

The invention also provides the backend server for the system. The backend server is designed to respectively receive at least one observed relative dynamic parameter and/or a derived behavior model from at least one observation unit in at least one regionally limited area and, based on the observed at least one relative dynamic parameter, to derive a behavior model that describes an expected behavior of the traffic participants in the respective area as regards the at least one relative dynamic parameter, and to store the derived behavior model in a spatial database where the behavior model is associated with the respective area for which it has been derived and, in answer to a respective support request of at least one self-driving vehicle, to obtain the behavior model for the area that is identified by the respective support request from the spatial database, and to provide it to an autopilot functionality of the requesting self-driving vehicle.

According to one aspect, the invention also provides a self-driving vehicle that may use the behavior strategy as it may be provided by the system. The vehicle comprises an electronic control unit that is designed to provide an autopilot functionality. The self-driving vehicle is characterized in that the control unit is designed to identify a regionally limited area that the vehicle is approaching or entering. The borders of the area may be defined in a digital street map, and the control unit may identify its present position and its present direction on the basis of a GNSS (Global Navigation Satellite System), e.g. the GPS (Global Positioning System), and a planned driving route. The control unit is further designed to send a support request for requesting a behavior model from a spatial database, as it may be provided by the described backend server, and to receive the requested behavior model from the spatial database, and to configure the autopilot functionality on the basis of the received behavior model. By configuring the autopilot functionality, a predefined at least one relative dynamic parameter is set according to the behavior model such that the autopilot functionality will model the behavior of other traffic participants according to the behavior model when planning at least one trajectory for the self-driving vehicle in the area. The self-driving vehicle may be designed as a passenger vehicle or a truck or a bus.

In the following, an implementation example of the invention is described. The single figure shows:
- Fig.: a schematic illustration of an embodiment of the inventive system performing an embodiment of the inventive method.

The embodiment explained in the following is a preferred embodiment of the invention. However, in the embodiment, the described components of the embodiment each represent individual features of the invention which are to be considered independently of each other and which each develop the invention also independently of each other and thereby are also to be regarded as a component of the invention in individual manner or in another than the shown combination. Furthermore, the described embodiment can also be supplemented by further features of the invention already described.

In the figures identical reference signs indicate elements that provide the same function.

The Figure shows a system 10 that may comprise at least one observation unit 11, 12, and a backend server 13 (e.g. an internet server), and at least one self-driving vehicle 14. An electronic control unit 15 of the at least one self-driving vehicle 14 may provide an autopilot functionality A through which the electronic control unit 15 may drive the respective self-driving vehicle 14 autonomously. The autopilot functionality A may be implemented as a program module in a processing unit of the control unit 15. The autopilot functionality A may be performed on the basis of at least one microprocessor and/or at least one microcontroller of the processing unit. The autopilot functionality A may plan a trajectory 16, which it may then follow by steering vehicle 14 and/or controlling the speed of vehicle 14.

E.g. for planning trajectory 16, the autopilot functionality A must take into account or consider the behavior of other traffic participants. To this end, a behavior model 17 may be used by the autopilot functionality A. This behavior model 17 may model the expected behavior or the characteristic behavior of other traffic participants. Especially, the behavior model 17 may take into account or even describe at least one relative dynamic parameter that describes how close and/or how fast traffic participants get with regard to each other. The behavior model 17 may be valid for only a regionally limited spatial area 18, e.g. for a specific town quarter or a specific village. In other words, behavior model 17 is exchanged whenever vehicle 14 is changing the area.

For determining which area vehicle 14 is entering, the electronic control unit 15 may observe position data 19 from a GNSS-receiving unit 20, which may receive a position signal from a GNSS, for example the GPS. The electronic control unit 15 may then send out a support request 21 by means of a communication unit C, which can be based on e.g. Wi-Fi technology and/or mobile phone technology. The support request 21 may be received by the backend server 13. Backend server 13 may be based on at least one computer that may be connected to the internet 22. Support request 21 may comprise an area identifier data 23 which identifies the area 18 that vehicle 14 is approaching. The area identifier data 23 may be obtained by electronic control unit 15 from e.g. a navigation database that may be provided in vehicle 14. Based on the support request 21, backend server 13 may obtain behavior model 17 associated with area 18 that is identified in the support request 21. Behavior model 17 may then be transferred to electronic control unit 15 by means of communication unit C.

The behavior model 17 may indicate or describe a level of aggressiveness, which may decide how close a planned trajectory 16 may lead vehicle 14 past another traffic participant, for example another vehicle. Behavior model 17 may additionally or alternatively provide configuration data for a trajectory projection which may be operated in electronic control unit 15 for predicting trajectories of other traffic participants. Behavior model 17 may describe a typical behavior of other traffic participants in area 18. Additionally or alternatively, behavior model 17 may provide an artificial neural network or a part of an artificial neural network that may be used by the autopilot functionality A for steering or conducting vehicle 14.

In the backend server 13, a spatial database 24 may be operated or provided that may associate area identification data 23 with corresponding behavior model 17. There may be several behavior models 17 provided, one for each specific area 18 that is covered by system 10.

For deriving or building a behavior model 17 for a specific area 18, the at least one observation unit 11, 12 may be used.

For example, observation unit 11 may be provided in an observation vehicle 25 that is a vehicle that is selected to observe local traffic 26 in areas 18, which observation vehicle 25 is passing through. By means of an observation vehicle 25 and its observation unit 11, a respective behavior model 17 for more than one area may be generated. An observation unit 12 can be a stationary traffic observation device 27 which may be installed in a stationary place in area 18, e.g. at a lamp post 28. By means of such an observation unit 12 in a stationary traffic observation device 27, local traffic 26 of only one area 18 may be observed, but it may be observed more intensively than with a moving observation vehicle 25.

For building or deriving a behavior model 17, at least one relative dynamic parameter must be observed in area 18. To this end, at least one traffic observation unit 11, 12 observes at least one traffic situation 29, 30, in which at least two traffic participants 31, 32, 33, 34 are involved. In the Figure, the exemplary traffic situation 29 comprises a cyclist as traffic participant 31 and a vehicle as a traffic participant 32. The cyclist plans to drive on a straight line through area 18, wherein the vehicle plans to turn right, which will cross the way of the cyclist. The at least one traffic observation unit 11, 12 may observe a distance 35 as one example of a relative dynamic parameter 35. This distance 35 is the distance that the two traffic participants 31, 32 keep as a minimum distance while they are involved in traffic situation 29.

The exemplary traffic situation 30 may involve the observation vehicle 25 itself as traffic participant 34. Traffic participant 33 may be a pedestrian who is waiting due to a red traffic light 36. In area 18, pedestrians waiting at red traffic light may have the habit of standing very close to the road. By observing the relative distance 35 between traffic participants 33, 34, the relative dynamic parameter "distance" 35 in traffic situation 30 may make this clear for the observation unit 11 and/or 12. The observed relative dynamic parameters (like the value of distance 35) may be transferred to backend server 13 by means of e.g. Wi-Fi technology and/or mobile phone technology. In backend server 13, an analyzation unit 37 (or in general a processing unit), may combine the observed at least one relative dynamic parameter 35 for deriving the behavior model 17 for area 18. The processing unit 37 may comprise at least one microprocessor and/or at least one microcontroller. For deriving behavior model 17, a mean value of corresponding values of relative dynamic parameters, e.g. distance and/or speed and/or acceleration, may be calculated and/or a statistic analysis of the at least one relative dynamic parameter may be calculated, indicating mean value and/or variants. Additionally or alternatively, the observed relative dynamic parameter may be trained into an artificial neuronal network that may be trained in the respective observation unit 11, 12 such that not the single values of the relative dynamic parameter need to be transferred, but a final behavior model 17 is generated inside each observation unit 11, 12. Alternatively, a second component 38 for each observation unit 11, 12 may be operated in the backend server 13 itself as a backend component, which may, for example, do the training of a neural network.

In a preferred embodiment, the system is concerned with a self-driving vehicle 14. Different driving behaviors / driving strategies may be provided for an autopilot functionality A of the self-driving vehicle 14 in order to cope with regional differences regarding the behavior of the local traffic 26 in an area 18. For example, close to a school, children may tend to cross the road without watching, such that the driving strategy should be adapted in that area (for example driving at much lower speed than is actually allowed, which corresponds to a specific level of aggressiveness).

For deriving the driving strategy or the behavior model 17, the behavior of traffic participants 31, 32, 33, 34 is observed in different regions or areas 18 and for each region or area 18 a behavior model 17 for an appropriate driving strategy is provided in a digital street map of a spatial database 24 for download by self-driving vehicles 14 with autopilot systems.

Three possibilities of observing the traffic participants are given:
1. a self-driving vehicle observes the "self-experienced" traffic;
2. a self-driving vehicle observes other vehicles, how they behave with regard to each other;
3. a camera (e.g. in an lamp post) observes the traffic at one specific place.
4.

Three ways for storing a new driving strategy in the digital street map for use by other autopilots:
1. the self-driving vehicle provides (parts of) its neural network data to the map server. Another self-driving vehicle (autopilot) may use the neural network data to adapt its own neural network.
2. Configuration data for a trajectory prediction may be provided. The configuration data may describe the expected driving behavior of vehicles in a region.
3. A general level of aggressiveness may be provided in the map.

The behavior of traffic participants is observed in different regions and for each region, a model for an appropriate driving strategy is provided in a digital street map.

Three possibilities of observation:
- a self-driving vehicle observes the "self-experienced" traffic (how close do other vehicles come to the self-driving vehicle, how abruptly do they stop when the self-driving vehicle has right of way)
- a self-driving vehicle observes other vehicles, how they behave with regard to each other (same categories: distance towards each other, abrupt stopping...)
- a camera (e.g. in an lamp post) observes the traffic at one specific place (same categories: distance towards each other, abrupt stopping...)

Three ways for storing a driving strategy in the digital street map for other vehicles:
- the self-driving vehicle provides (parts of) its neural network data to a central map server. The neural network data describe the result of e.g. a reinforcement learning after driving through a specific region. Another self-driving vehicle may use the neural network data to adapt its own neural network.
- Configuration data for a trajectory prediction may be provided. The configuration data may describe the expected driving behavior of vehicles in a region (e.g.: fast approach at crossroads and then abrupt stopping). Another self-driving vehicle may use the configuration data in order to adapt its own trajectory prediction for modelling the expected behavior of other vehicles.
- A level of aggressiveness may be provided (abstract configuration value for adapting the trajectory planning of the self-driving vehicle).

The digital street map is enriched with data on the average behavior of traffic participants in different regions. The data are collected automatically by self-driving cars / local cameras without the need of human observation of the traffic. This is cheaper.

Overall, the example shows how a method for learning by observation is provided by the invention.

## Claims

1. Method for supporting a respective autopilot functionality (A) of at least one self-driving vehicle (14) in coping with a respective characteristic behavior of local traffic (26) in a respective specific regionally limited area (18), the method comprising the following steps:
- observation units (11, 12) observing at least one traffic situation (29, 30) in the corresponding area (18) for which the support is to be provided, wherein each traffic situation (29, 30) involves at least two traffic participants (31, 32, 33, 34) and the observation concerns at least one relative dynamic parameter (35) that describes a relative distance and/or a relative speed and/or a relative acceleration of at least one of the traffic participants (31, 32, 33, 34) with regard to at least one other of the traffic participants (31, 32, 33, 34), wherein the respective observation unit (11, 12) is each at least partially integrated into one of the following:
a) an observation vehicle (25) and the at least one relative dynamic parameter (35) is measured with regard to the observation vehicle (25) itself,
b) an observation vehicle (25) and the at least one relative dynamic parameter (35) is measured between at least two other traffic participants (31, 32),
c) a stationary traffic observation device (27) and the at least one relative dynamic parameter (35) is measured with regard to at least two traffic participants (31, 32, 33, 34) passing by the observation device (27),
and
- based on the observed at least one relative dynamic parameter (35) a behavior model (17) is derived that describes an expected behavior of the traffic participants (31, 32, 33, 34) in the area (18), wherein the behavior model (17) regards the at least one relative dynamic parameter (35), and
- the derived behavior model (17) is stored in a spatial database (24) where the behavior model (17) is associated with the respective area (18) for which it has been derived, and
- in answer to a respective support request (21) of the at least one self-driving vehicle (14) the behavior model (17) for the area (18) as identified by the respective support request (21) is obtained from the spatial database (24) and is provided to the autopilot functionality (A) of the requesting self-driving vehicle (14),
**characterized in that**
- a level of aggressiveness is being provided for the autopilot functionality (A) of the self-driving vehicle (14) in order to cope with regional differences regarding the behavior of the local traffic (26) in the respective area (18), wherein the respective behavior model (17) comprises a value describing the level of aggressiveness that the self-driving vehicle (14) that has requested the behavior model (17) shall apply and/or expect in the area (18), wherein the level of aggressiveness sets a minimum distance threshold that the autopilot functionality (A) of the self-driving vehicle (14) will comply with when planning a driving trajectory (16) while driving through the area (18).

2. Method according to claim 1, wherein the respective behavior model (17) comprises an artificial neural network and for deriving the behavior model (17) the observation unit (11, 12) trains the neural network while observing the at least one traffic situation (29, 30) and feeds the observed at least one relative dynamic parameter (35) into the neural network.

3. Method according to any of the preceding claims, wherein the respective behavior model (17) comprises configuration data for a trajectory prediction, wherein the configuration data are designed to control an extrapolation algorithm for predicting a future behavior of traffic participants (31, 32, 33, 34) observed by the self-driving vehicle (14) that has requested the behavior model (17).

4. System (10) for supporting at least one self-driving vehicle (14) in driving through at least one specific regionally limited area (18), the system (10) comprising
a) observation units (11, 12) observing at least one traffic situation (29, 30) in the corresponding area (18) for which the support is to be provided, wherein each traffic situation (29, 30) involves at least two traffic participants (31, 32, 33, 34) and the observation concerns at least one relative dynamic parameter (35) that describes a relative distance and/or a relative speed and/or a relative acceleration of at least one of the traffic participants (31, 32, 33, 34) with regard to at least one other of the traffic participants (31, 32, 33, 34), wherein the respective observation unit (11, 12) is each at least partially integrated into one of the following: an observation vehicle (25) and the at least one relative dynamic parameter (35) is measured with regard to the observation vehicle (25) itself,
b) an observation vehicle (25) and the at least one relative dynamic parameter (35) is measured between at least two other traffic participants (31, 32),
c) a stationary traffic observation device (27) and the at least one relative dynamic parameter (35) is measured with regard to at least two traffic participants (31, 32, 33, 34) passing by the observation device (27),
the system further comprising:
a backend server (13) with a spatial database (24) and the at least one self-driving vehicle (14),
wherein each observation unit (11, 12) is further configured to provide the observed at least one relative dynamic parameter (35) and/or
a derived behavior model (17) to the spatial database (24) of the backend server (13), wherein the observed at least one relative dynamic parameter (35) and/or the behavior model (17) is associated with the respective area (18) for which is has been derived,
when the backend server (13) is designed to
- receive at least one observed relative dynamic parameter (35) from the respective observation unit (11, 12), and
i) derive the behavior model (17) that describes an expected behavior of the traffic participants (31, 32, 33, 34) in the respective area (18) as regards the at least one relative dynamic parameter (35), and/or
ii) receive a respective behavior model (17) from the observation units (11, 12), and
- store each derived and/or received behavior model (17) in a spatial database (24) where the behavior model (17) is associated with the respective area (18) for which it has been derived,
- and, in answer to a respective support request (21) of at least one self-driving vehicle (14), to obtain from the spatial database (24) the behavior model (17) for the area (18) that is identified by the respective support request (21) and to provide it to an autopilot functionality (A) of the requesting self-driving vehicle (14), and
- provide a level of aggressiveness for the autopilot functionality (A) of the self-driving vehicle (14) in order to cope with regional differences regarding the behavior of the local traffic (26) in the respective area (18),
wherein the respective behavior model (17) comprises a value describing the level of aggressiveness that the self-driving vehicle (14) that has requested the behavior model (17) shall apply and/or expect in the area (18), wherein the level of aggressiveness sets a minimum distance threshold that the autopilot functionality (A) of the self-driving vehicle (14) will comply with when planning a driving trajectory (16) while driving through the area (18),
wherein the vehicle (14) comprises an electronic control unit (15) that is designed to provide an autopilot functionality (A), wherein
the control unit (15) is designed to identify a regionally limited area (18) that the vehicle (14) is approaching or entering and to send a support request (21) for requesting a behavior model (17) from a spatial database (24) and to receive the requested behavior model (17) from the spatial database (24) and to configure the autopilot functionality (A) on the basis of the received behavior model (17), wherein by configuring the autopilot functionality (A) a predefined at least one relative dynamic parameter (35) is set according to the behavior model (17) such that the autopilot functionality (A) will model the behavior of other traffic participants (31, 32, 33, 34) according to the behavior model (17), when planning at least one trajectory (16) for the self-driving vehicle (14) in the area (18).

## Patentansprüche

1. Verfahren zur Unterstützung einer jeweiligen Autopilot-Funktionalität (A) mindestens eines selbstfahrenden Fahrzeugs (14) bei der Bewältigung eines jeweiligen charakteristischen Verhaltens des örtlichen Verkehrs (26) in einem jeweiligen regional eingeschränkten spezifischen Bereich (18), wobei das Verfahren die folgenden Schritte umfasst:
- Beobachten, durch Beobachtungseinheiten (11, 12), mindestens einer Verkehrssituation (29, 30) in dem entsprechenden Bereich (18), für den die Unterstützung bereitzustellen ist, wobei jede Verkehrssituation (29, 30) mindestens zwei Verkehrsteilnehmer (31, 32, 33, 34) einbezieht, und die Beobachtung mindestens einen relativen dynamischen Parameter (35) betrifft, der einen relativen Abstand und/oder eine relative Geschwindigkeit und/oder eine relative Beschleunigung mindestens eines der Verkehrsteilnehmer (31, 32, 33, 34) im Verhältnis zu mindestens einem anderen der Verkehrsteilnehmer (31, 32, 33, 34) beschreibt, wobei die jeweilige Beobachtungseinheit (11, 12) jeweils mindestens teilweise in eines integriert ist von:
a) einem Beobachtungsfahrzeug (25), und der mindestens eine relative dynamische Parameter (35) im Verhältnis zu dem Beobachtungsfahrzeug (25) selber gemessen wird,
b) einem Beobachtungsfahrzeug (25), und der mindestens eine relative dynamische Parameter (35) zwischen mindestens zwei anderen Verkehrsteilnehmern (31, 32) gemessen wird,
c) einer stationären Verkehrsbeobachtungsvorrichtung (27), und der mindestens eine relative dynamische Parameter (35) im Verhältnis zu mindestens zwei Verkehrsteilnehmern (31, 32, 33, 34) gemessen wird, die an der Beobachtungsvorrichtung (27) vorbeikommen,
und
- Ableiten, auf der Grundlage des beobachteten mindestens einen relativen dynamischen Parameters (35), eines Verhaltensmodells (17), das ein erwartetes Verhalten der Verkehrsteilnehmer (31, 32, 33, 34) in dem Bereich (18) beschreibt, wobei das Verhaltensmodell (17) den mindestens einen relativen dynamischen Parameter (35) betrifft, und
- Speichern des abgeleiteten Verhaltensmodells (17) in einer räumlichen Datenbank (24), in der das Verhaltensmodell (17) dem jeweiligen Bereich (18) zugeordnet wird, für den es abgeleitet wurde, und
- als Reaktion auf eine jeweilige Unterstützungsanfrage (21) des mindestens einen selbstfahrenden Fahrzeugs (14), Erzielen des Verhaltensmodells (17) für den Bereich (18), wie er durch die jeweilige Unterstützungsanfrage (21) identifiziert wird, aus der räumlichen Datenbank (24), und Bereitstellen für die Autopilot-Funktionalität (A) des anfragenden selbstfahrenden Fahrzeugs (14),
**dadurch gekennzeichnet, dass**
- ein Aggressivitätsniveau für die Autopilot-Funktionalität (A) des selbstfahrenden Fahrzeugs (14) bereitgestellt wird, um regionale Unterschiede bezüglich des Verhaltens des örtlichen Verkehrs (26) in dem jeweiligen Bereich (18) zu bewältigen, wobei das jeweilige Verhaltensmodell (17) einen Wert umfasst, der das Aggressivitätsniveau beschreibt, welches das selbstfahrende Fahrzeug (14), welches das Verhaltensmodell (17) angefragt hat, in dem Bereich (18) anwenden und/oder erwarten soll, wobei das Aggressivitätsniveau eine minimale Abstandsschwelle einstellt, welche die Autopilot-Funktionalität (A) des selbstfahrenden Fahrzeugs (14) einhält, wenn sie eine Fahrtrajektorie (16) plant, während durch den Bereich (18) gefahren wird.

2. Verfahren nach Anspruch 1, wobei das jeweilige Verhaltensmodell (17) ein künstliches neuronales Netz umfasst, und die Beobachtungseinheit (11, 12) das neuronale Netz zum Ableiten des Verhaltensmodells (17) trainiert, während sie die mindestens eine Verkehrssituation (29, 30) beobachtet, und den beobachteten mindestens einen relativen dynamischen Parameter (35) in das neuronale Netz einspeist.

3. Verfahren nach einem der vorhergehenden Ansprüche, wobei das jeweilige Verhaltensmodell (17) Konfigurationsdaten für eine Trajektorienvorhersage umfasst, wobei die Konfigurationsdaten dazu ausgelegt sind, einen Extrapolationsalgorithmus zu steuern, um ein zukünftiges Verhalten der Verkehrsteilnehmer (31, 32, 33, 34) vorherzusagen, die von dem selbstfahrenden Fahrzeug (14), das nach dem Verhaltensmodell (17) gefragt hat, beobachtet werden.

4. System (10) zur Unterstützung mindestens eines selbstfahrenden Fahrzeugs (14) beim Fahren durch mindestens einen regional eingeschränkten spezifischen Bereich (18), wobei das System (10) umfasst
a) Beobachtungseinheiten (11, 12), die mindestens eine Verkehrssituation (29, 30) in dem entsprechenden Bereich (18) beobachten, für den die Unterstützung bereitzustellen ist, wobei jede Verkehrssituation (29, 30) mindestens zwei Verkehrsteilnehmer (31, 32, 33, 34) einbezieht, und die Beobachtung mindestens einen relativen dynamischen Parameter (35) betrifft, der einen relativen Abstand und/oder eine relative Geschwindigkeit und/oder eine relative Beschleunigung mindestens eines der Verkehrsteilnehmer (31, 32, 33, 34) im Verhältnis zu mindestens einem anderen der Verkehrsteilnehmer (31, 32, 33, 34) beschreibt, wobei die jeweilige Beobachtungseinheit (11, 12) mindestens teilweise in eines integriert ist von: einem Beobachtungsfahrzeug (25), und der mindestens eine relative dynamische Parameter (35) im Verhältnis zu dem Beobachtungsfahrzeug (25) selber gemessen wird,
b) einem Beobachtungsfahrzeug (25), und der mindestens eine relative dynamische Parameter (35) zwischen mindestens zwei anderen Verkehrsteilnehmern (31, 32) gemessen wird,
c) einer stationären Verkehrsbeobachtungsvorrichtung (27), und der mindestens eine relative dynamische Parameter (35) im Verhältnis zu mindestens zwei Verkehrsteilnehmern (31, 32, 33, 34) gemessen wird, die an der Beobachtungsvorrichtung (27) vorbeikommen,
wobei das System ferner umfasst:
einen Backend-Server (13) mit einer räumlichen Datenbank (24) und dem mindestens einen selbstfahrenden Fahrzeug (14),
wobei jede Beobachtungseinheit (11, 12) ferner konfiguriert ist zum
Bereitstellen des mindestens einen relativen dynamischen Parameters(35) und/oder eines abgeleiteten Verhaltensmodells (17) für die räumliche Datenbank (24) des Backend-Servers (13), wobei der beobachtete mindestens eine relative dynamische Parameter (35) und/oder das Verhaltensmodell (17) dem jeweiligen Bereich (18) zugeordnet sind, für den sie abgeleitet wurden,
wobei der Backend-Server (13) ausgelegt ist zum
- Empfangen mindestens eines beobachteten relativen dynamischen Parameters (35) von der jeweiligen Beobachtungseinheit (11, 12), und
i) Ableiten des Verhaltensmodells (17), das ein erwartetes Verhalten der Verkehrsteilnehmer (31, 32, 33, 34) in dem jeweiligen Bereich (18) bezüglich des mindestens einen relativen dynamischen Parameters (35) beschreibt, und/oder
ii) Empfangen eines jeweiligen Verhaltensmodells (17) von den Beobachtungseinheiten (11, 12), und
- Speichern jedes abgeleiteten und/oder empfangenen Verhaltensmodells (17) in einer räumlichen Datenbank (24), in der das Verhaltensmodell (17) dem jeweiligen Bereich (18) zugeordnet wird, für den es abgeleitet wurde,
- und, als Reaktion auf eine jeweilige Unterstützungsanfrage (21) des mindestens einen selbstfahrenden Fahrzeugs (14), Erzielen aus der räumlichen Datenbank (24) des Verhaltensmodells (17) für den Bereich (18), der durch die jeweilige Unterstützungsanfrage (21) identifiziert wird, und Bereitstellen desselben für eine Autopilot-Funktionalität (A) des anfragenden selbstfahrenden Fahrzeugs (14), und
- Bereitstellen eines Aggressivitätsniveaus für die Autopilot-Funktionalität (A) des selbstfahrenden Fahrzeugs (14), um regionale Unterschiede bezüglich des Verhaltens des örtlichen Verkehrs (26) in dem jeweiligen Bereich (18) zu bewältigen,
wobei das jeweilige Verhaltensmodell (17) einen Wert umfasst, der das Aggressivitätsniveau beschreibt, welches das selbstfahrende Fahrzeug (14), welches das Verhaltensmodell (17) angefragt hat, in dem Bereich (18) anwenden und/oder erwarten soll, wobei das Aggressivitätsniveau eine minimale Abstandsschwelle einstellt, welche die Autopilot-Funktionalität (A) des selbstfahrenden Fahrzeugs (14) einhält, wenn sie eine Fahrtrajektorie (16) plant, während durch den Bereich (18) gefahren wird.
wobei das Fahrzeug (14) eine elektronische Steuereinheit (15) umfasst, die dazu ausgelegt ist, eine Autopilot-Funktionalität (A) bereitzustellen, wobei
die Steuereinheit (15) dazu ausgelegt ist, einen regional eingeschränkten Bereich (18) zu identifizieren, dem sich das Fahrzeug (14) nähert und in den es hineinfährt, und eine Unterstützungsanfrage (21) zu senden, um ein Verhaltensmodell (17) aus einer räumlichen Datenbank (24) anzufragen, und das Verhaltensmodell (17) zu empfangen, das aus der räumlichen Datenbank (24) angefragt wurde, und die Autopilot-Funktionalität (A) auf der Grundlage des empfangenen Verhaltensmodells (17) zu konfigurieren, wobei durch das Konfigurieren der Autopilot-Funktionalität (A) ein vordefinierter mindestens einer relativer dynamischer Parameter (35) gemäß dem Verhaltensmodell (17) derart eingestellt wird, dass die Autopilot-Funktionalität (A) das Verhalten anderer Verkehrsteilnehmer (31, 32, 33, 34) gemäß dem Verhaltensmodell (17) modelliert, wenn sie mindestens eine Trajektorie (16) für das selbstfahrende Fahrzeug (14) in dem Bereich (18) plant.

## Revendications

1. Procédé permettant de prendre en charge une fonctionnalité d'autopilote (A) respective d'au moins un véhicule à conduite automatique (14) pour faire face à un comportement caractéristique respectif de trafic local (26) dans une zone spécifique (18), limitée au niveau régional, respective, le procédé comprenant les étapes suivantes consistant à :
- observer, par des unités d'observation (11, 12), au moins une situation de trafic (29, 30) dans la zone correspondante (18) pour laquelle le support est à fournir, dans lequel chaque situation de trafic (29, 30) implique au moins deux usagers de la route (31, 32, 33, 34), et l'observation concerne au moins un paramètre dynamique relatif (35) qui décrit une distance relative et/ou une vitesse relative et/ou une accélération relative d'au moins l'un des usagers de la route (31, 32, 33, 34) par rapport à au moins un autre des usagers de la route (31, 32, 33, 34), dans lequel l'unité d'observation (11, 12) respective est au moins partiellement intégrée dans l'un des éléments suivants :
a) un véhicule d'observation (25), et ledit au moins un paramètre dynamique relatif (35) est mesuré par rapport au véhicule d'observation (25) lui-même,
b) un véhicule d'observation (25), et ledit au moins un paramètre dynamique relatif (35) est mesuré entre au moins deux autres usagers de la route (31, 32),
c) un dispositif stationnaire d'observation de trafic (27), et ledit au moins un paramètre dynamique relatif (35) est mesuré par rapport à au moins deux usagers de la route (31, 32, 33, 34) passant devant le dispositif d'observation (27),
et
- dériver, sur la base dudit au moins un paramètre dynamique relatif (35) observé, un modèle de comportement (17) qui décrit un comportement attendu des usagers de la route (31, 32, 33, 34) dans la zone (18), dans lequel le modèle de comportement (17) concerne ledit au moins un paramètre dynamique relatif (35), et
- stocker le modèle de comportement (17) dérivé dans une base de données spatiale (24) dans laquelle le modèle de comportement (17) est associé à la zone respective (18) pour laquelle il a été dérivé, et
- en réponse à une demande de support (21) respective dudit au moins un véhicule à conduite automatique (14), obtenir le modèle de comportement (17) pour la zone (18) tel qu'identifié par la demande de support (21) respective à partir de la base de données spatiale (24) et le fournir à la fonctionnalité d'autopilote (A) du véhicule à conduite automatique (14) demandeur,
**caractérisé en ce que**
- un niveau d'agressivité est fourni pour la fonctionnalité d'autopilote (A) du véhicule à conduite automatique (14) de façon à faire face à des différences régionales concernant le comportement du trafic local (26) dans la zone respective (18), dans lequel le modèle de comportement (17) respectif comprend une valeur décrivant le niveau d'agressivité que le véhicule à conduite automatique (14) qui a demandé le modèle de comportement (17) doit appliquer et/ou attendre dans la zone (18), dans lequel le niveau d'agressivité règle un seuil de distance minimal auquel se conformera la fonctionnalité d'autopilote (A) du véhicule à conduite automatique (14) lorsqu'elle planifiera une trajectoire de conduite (16) pendant la conduite à travers la zone (18).

2. Procédé selon la revendication 1, dans lequel le modèle de comportement (17) respectif comprend un réseau neuronal artificiel, et pour dériver le modèle de comportement (17), l'unité d'observation (11, 12) entraîne le réseau neuronal tout en observant ladite au moins une situation de trafic (29, 30) et injecte ledit au moins un paramètre dynamique relatif (35) dans le réseau neuronal.

3. Procédé selon l'une quelconque des revendications précédentes, dans lequel le modèle de comportement (17) respectif comprend des données de configuration pour une prédiction de trajectoire, dans lequel les données de configuration sont conçues pour commander un algorithme d'extrapolation pour prédire un comportement futur des usagers de la route (31, 32, 33, 34) observés par le véhicule à conduite automatique (14) qui a demandé le modèle de comportement (17).

4. Système (10) permettant de prendre en charge au moins un véhicule à conduite automatique (14) lors de la conduite à travers au moins une zone spécifique (18) limitée au niveau régional, le système (10) comprenant
a) des unités d'observation (11, 12) observant au moins une situation de trafic (29, 30) dans la zone (18) correspondante pour laquelle la prise en charge est à fournir, dans lequel chaque situation de trafic (29, 30) implique au moins deux usagers de la route (31, 32, 33, 34), et l'observation concerne au moins un paramètre dynamique relatif (35) qui décrit une distance relative et/ou une vitesse relative et/ou une accélération relative d'au moins l'un des usagers de la route (31, 32, 33, 34) par rapport à au moins un autre des usagers de la route (31, 32, 33, 34), dans lequel l'unité d'observation (11, 12) respective est respectivement au moins partiellement intégrée dans l'un des éléments suivants : un véhicule d'observation (25), et ledit au moins un paramètre dynamique relatif (35) est mesuré par rapport au véhicule d'observation (25) lui-même,
b) un véhicule d'observation (25), et ledit au moins un paramètre dynamique relatif (35) est mesuré entre au moins deux autres usagers de la route (31, 32),
c) un dispositif d'observation de trafic stationnaire (27), et ledit au moins un paramètre dynamique relatif (35) est mesuré par rapport à au moins deux usagers de la route (31, 32, 33, 34) passant devant le dispositif d'observation (27),
le système comprenant en outre :
un serveur dorsal (13) avec une base de données spatiale (24) et ledit au moins un véhicule à conduite automatique (14),
dans lequel chaque unité d'observation (11, 12) est en outre configurée pour
fournir ledit au moins un paramètre dynamique relatif (35) et/ou un modèle de comportement (17) dérivé à la base de données spatiale (24) du serveur dorsal (13), dans lequel ledit au moins un paramètre dynamique relatif (35) observé et/ou le modèle de comportement (17) sont associés à la zone (18) respective pour laquelle ils ont été dérivés,
le serveur dorsal (13) étant conçu pour
- recevoir au moins un paramètre dynamique relatif (35) observé de l'unité d'observation (11, 12) respective, et
i) dériver le modèle de comportement (17) qui décrit un comportement attendu des usagers de la route (31, 32, 33, 34) dans la zone (18) respective en ce qui concerne ledit au moins un paramètre dynamique relatif (35), et/ou
ii) recevoir un modèle de comportement (17) respectif des unités d'observation (11, 12), et
- stocker chaque modèle de comportement (17) dérivé et/ou reçu dans une base de données spatiale (24) dans laquelle le modèle de comportement (17) est associé à la zone (18) respective pour laquelle il a été dérivé,
- et, en réponse à une demande de prise en charge (21) respective dudit au moins un véhicule à conduite automatique (14), obtenir de la base de données spatiale (24) le modèle de comportement (17) pour la zone (18) qui est identifiée par la demande de prise en charge (21) respective, et le fournir à une fonctionnalité d'autopilote (A) du véhicule à conduite automatique (14) demandeur, et
- fournir un niveau d'agressivité pour la fonctionnalité d'autopilote (A) du véhicule à conduite automatique (14) de façon à faire face à des différences régionales concernant le comportement du trafic local (26) dans la zone respective (18),
dans lequel le modèle de comportement (17) respectif comprend une valeur décrivant le niveau d'agressivité que le véhicule à conduite automatique (14) qui a demandé le modèle de comportement (17) doit appliquer et/ou attendre dans la zone (18), dans lequel le niveau d'agressivité règle un seuil de distance minimal auquel se conformera la fonctionnalité d'autopilote (A) du véhicule à conduite automatique (14) lorsqu'elle planifiera une trajectoire de conduite (16) pendant la conduite à travers la zone (18),
dans lequel le véhicule (14) comprend une unité de commande électronique (15) qui est conçue pour fournir une fonctionnalité d'autopilote (A), dans lequel
l'unité de commande (15) est conçue pour identifier une zone (18) limitée au niveau régional dont le véhicule (14) s'approche ou dans laquelle il entre, et pour envoyer une demande de prise en charge (21) pour demander un modèle de comportement (17) d'une base de données spatiale (24) et pour recevoir le modèle de comportement (17) demandé de la base de données spatiale (24) et pour configurer la fonctionnalité d'autopilote (A) sur la base du modèle de comportement (17) reçu,
dans lequel en configurant la fonctionnalité d'autopilote (A), au moins un paramètre dynamique relatif (35) prédéfini est réglé selon le modèle de comportement (17) de telle sorte que la fonctionnalité d'autopilote (A) modélisera le comportement d'autres usagers de la route (31, 32, 33, 34) selon le modèle de comportement (17), lorsqu'elle planifie moins une trajectoire (16) pour le véhicule à conduite automatique (14) dans la zone (18).
